# FASCICULE DE BREVET EUROPEEN

(11) **EP 0 565 400 B1**
(45) Date de publication et mention de la délivrance du brevet: **11.10.1995**
(21) Numéro de dépôt: 93400794.9
(22) Date de dépôt: 26.03.1993
(51) Int. Cl.: B60K 20/02, F16H 61/36, F16H 59/04, B60K 20/08

(54) **Dispositif de commande d'une boîte de vitesses de véhicule automobile**
Steuervorrichtung für das Geschwindigkeitswechselgetriebe eines Kraftfahrzeuges
Control device for the change-speed gearbox of a motor vehicle

(30) Priorité: 07.04.1992 FR 9204250
(43) Date de publication de la demande: 13.10.1993
(73) Titulaire: AUTOMOBILES PEUGEOT, 75116 Paris (FR); AUTOMOBILES CITROEN, 92200 Neuilly-sur-Seine (FR)
(72) Inventeur: Anger, Gérard, F-78480 Verneuil sur Seine (FR)
(74) Mandataire: Durand, Yves Armand Louis

(56) Documents cités:
- EP-A- 0 333 429
- GB-A- 966 186
- GB-A- 1 010 958
- US-A- 2 821 090
- US-A- 4 712 640
- PATENT ABSTRACTS OF JAPAN vol. 8, no. 137 (P-282)26 Juin 1984 & JP-A-59 036 829 (CHIYUUOU HATSUJIYOU K.K.) 29 Février 1984
- PATENT ABSTRACTS OF JAPAN vol. 9, no. 133 (P-362)(1856) 8 Juin 1985 & JP-A-60 15 723 (NISSAN JIDOSHA K.K.) 26 Janvier 1985

## Description

La présente invention concerne un dispositif de commande d'une boîte de vitesses de véhicule automobile.

Les dispositifs de commande du changement de vitesses dans un véhicule automobile sont généralement constitués par un levier de commande monté pivotant dans un support fixe, autour de deux axes orthogonaux, ledit levier étant relié à deux organes (câbles ou tiges) destinés à la transmission des deux mouvements de pivotement du levier aux organes de la boîte de vitesses. Ces deux mouvements nécessitent d'être totalement indépendants de façon à entraîner respectivement deux translations indépendantes des câbles ou tiges respectivement dits de sélection et de passage, la sélection et le passage correspondant respectivement aux mouvements du levier suivant la direction transversale et la direction longitudinale du véhicule.

On connaît par exemple, par le brevet GB N° 1010958, un mécanisme de commande d'une boîte de vitesses dans lequel deux tiges sensiblement parallèles relient la boîte de vitesses respectivement à deux bras qui pivotent, par l'actionnement du levier, respectivement sur deux axes perpendiculaires entre eux et à la direction moyenne des deux tiges, l'un des axes étant fixe et l'autre pivotant autour d'un troisième axe qui lui est perpendiculaire et qui est porté par un support fixe. Les deux bras sont solidaires chacun d'un levier coudé, de sorte que le dispositif nécessite quatre axes de pivotement et quatre liaisons articulées ou glissantes, dont les jeux de fonctionnement cumulés et les usures progressives génèrent des bruits et une imprécision de la position du levier de commande dans l'habitacle. De plus, la position des axes implique que le levier de commande soit sensiblement perpendiculaire aux tiges, donc à peu près vertical, et que par suite le support du mécanisme soit situé sur le plancher du véhicule, près du siège conducteur.

La présente invention résout ces problèmes et propose un dispositif de commande d'une boîte de vitesses, de structure simple et compacte, pour lequel la précision dans la position du levier de commande est optimisée, et permettant de placer le mécanisme près de la planche de bord du véhicule en dégageant le plancher.

A cet effet, la présente invention a pour objet un dispositif de commande d'une boîte de vitesses de véhicule automobile, du genre comportant un levier de manoeuvre apte à actionner deux organes de transmission reliés à la boîte de vitesses de manière à commander respectivement la sélection et le passage de plusieurs rapports, les portions extrêmes de ces deux organes situées du côté du levier s'étendant sensiblement parallèlement à une direction longitudinale du véhicule, lesdits organes étant articulés chacun sur l'extrémité libre de l'un de deux bras pivotant par l'actionnement du levier, respectivement sur deux axes perpendiculaires entre eux et à la direction précitée, l'un des deux axes dit premier, étant fixe alors que l'autre dit second, pivote autour d'un axe perpendiculaire audit second axe et porté par un support fixe, ce dispositif étant caractérisé en ce que le levier s'étend sensiblement parallèlement à la direction précitée et pivote sur le second axe avec l'un des bras dit second bras, ledit second axe étant monté pivotant autour du premier axe, celui-ci étant fixé au support entre deux flasques parallèles reliées par une paroi et s'étendant sensiblement suivant la direction précitée, jusqu'à deux cloisons transversales d'extrémité traversées par les organes de transmission.

Suivant une réalisation particulière, l'autre des bras dit premier bras, est parallèle au second axe, tous deux étant solidaires d'un moyeu monté tournant autour du premier axe entre les deux flasques.

Suivant une caractéristique particulière, les organes sont des câbles et les cloisons constituent des surfaces d'appui pour les gaines des câbles.

Avantageusement, le support est réalisé en tôle plié.

Suivant une caractéristique particulière, l'une des cloisons relie les parties inférieures respectives des deux flasques.

On notera que la paroi précitée est destinée à la fixation du support dans le véhicule.

De préférence, la direction précitée est sensiblement parallèle à la colonne de direction du véhicule, ou moins inclinée que cette dernière par rapport à la direction verticale du véhicule.

Mais d'autres avantages et caractéristiques de l'invention apparaîtront mieux dans la description détaillée qui suit et se réfère aux dessins annexés donnés uniquement à titre d'exemple et dans lesquels :
La figure 1 est une vue partielle en perspective, d'un dispositif de commande d'une boîte de vitesses conforme à l'invention.
La figure 2 est une vue partielle de côté, du même dispositif de commande, implanté dans un véhicule automobile.

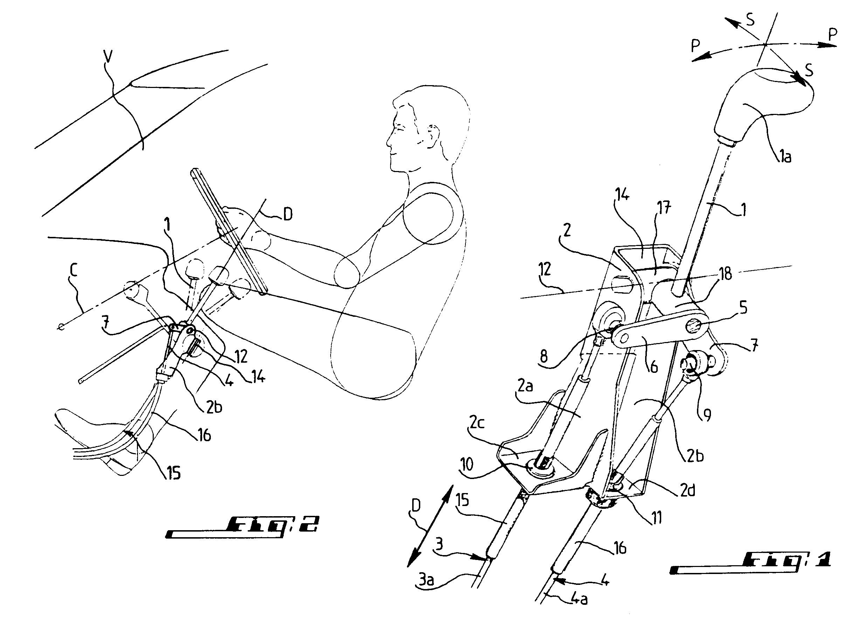

Sur la figure 1, on voit que le dispositif de commande de l'invention est constitué suivant une réalisation particulière, par un support 2 formé de deux flasques parallèles 2a, 2b dont les bords longitudinaux sont reliés par une paroi 14, ledit support 2 comportant à sa partie inférieure deux cloisons 2c, 2d destinées respectivement aux passages des organes 3, 4 dits de sélection et de passage reliés à la boîte de vitesses (non représentée).

Le support 2 précité est destiné à supporter un axe 12 dit premier, fixé par ses deux extrémités opposées respectivement aux deux flasques 2a, 2b, et autour duquel est monté pivotant un moyeu 17 s'étendant entre les deux flasques 2a, 2b. Ce moyeu 17 est solidaire d'un axe 5 dit second, s'étendant perpendiculairement audit moyeu 17 et au premier axe 12, et autour duquel est monté pivotant un manchon cylindrique 18 sur lequel est fixé le levier de manoeuvre 1 pourvu d'une poignée 1a, perpendiculairement à l'axe de ce manchon 18. Ce manchon 18 comprend, à l'une de ses extrémités opposées, un bras 6 monté autour dudit axe 5, ledit bras 6 étant relié par son extrémité libre au câble de passage 3a par l'intermédiaire d'une rotule 8.

On voit également sur cette figure, qu'un second bras 7 est solidarisé par l'une de ses extrémités au moyeu précité 17, ledit bras 7 s'étendant sensiblement parallèlement à la direction du manchon 18 et du second axe 5, alors que son autre extrémité comporte un axe 9 s'étendant parallèlement au moyeu 17 et autour duquel l'extrémité de l'autre 4a des deux câbles, dit câble de sélection, est montée pivotante. Les deux câbles précités 3a, 4a traversent respectivement deux orifices prévus respectivement dans les deux cloisons inférieures 2c, 2d dont l'une relie les bords inférieurs des deux flasques 2a, 2b dans un but de rigidification, lesdits câbles étant entourés d'une gaine 15, 16 pourvue d'éléments d'arrêt 10, 11 destinés à être fixés contre les cloisons 2c, 2d.

Le fonctionnement du dispositif de l'invention implanté dans un véhicule automobile va être décrit à travers ce qui suit à l'aide des figures. On décrira tout d'abord le fonctionnement d'un dispositif fixé à l'intérieur du véhicule de façon que le second axe précité soit disposé transversalement au véhicule, la sélection étant effectuée par pivotement autour du premier axe.

En fonctionnement, lorsque la commande du changement de vitesses est effectuée, en faisant pivoter dans un premier temps latéralement le levier de commande 1 vers la droite ou la gauche en fonction du choix du rapport de la boîte de vitesses, le levier 1 entraîne le second axe 5 et le bras dit second 7 en rotation autour du premier axe 12. Ce mouvement sans influence sur le câble de passage 3a, compte tenu de la liaison par rotule 8 entre le second bras 6 et ledit câble de passage 3a, provoquera une traction ou une poussée sur le câble de sélection 4a. Lorsque, dans un second temps, on imprime au levier de vitesse 1 un mouvement de pivotement suivant une direction longitudinale du véhicule, cette rotation du levier 1 provoquera dans un même mouvement, la rotation du manchon 18 et de son bras 6 associé autour du second axe 5, lequel bras 6 exercera par son extrémité non reliée au manchon 18, une poussée ou bien une traction sur le câble de passage 3a afin d'effectuer le passage de rapport sélectionné.

On notera que cet ensemble pourra être fixé par la paroi 14, par exemple sur une traverse de planche de bord ou autres, comme décrit dans la demande de brevet N° FR-91 02 963.

Sur la figure 2, cet ensemble a été fixé dans l'habitacle d'un véhicule de façon que le premier axe soit fixé transversalement au véhicule, d'où il résulte que le passage des rapports s'effectue par rotation autour de cet axe contrairement à la figure 1 sur laquelle le passage des rapports est effectué par pivotement du levier autour du second axe, la direction du levier 1 en position de point mort étant légèrement moins inclinée par rapport à la verticale que la colonne de direction C du véhicule.

On a donc réalisé grâce à l'invention, un ensemble compact de commande de boîte de vitesses, côté habitacle, lequel permet de minimiser les dispersions de position entre les butées de gaine et les points d'accrochage sur les leviers, ceci permettant un positionnement précis et constant du levier de vitesse dans l'habitacle.

## Revendications

1. Dispositif de commande d'une boîte de vitesses de véhicule automobile, du genre comportant un levier (1) de manoeuvre apte à actionner deux organes (3, 4) de transmission reliés à la boîte de vitesses de manière à commander respectivement la sélection et le passage de plusieurs rapports, les portions extrêmes de ces deux organes situées du côté du levier s'étendant sensiblement parallèlement à une direction (D) longitudinale du véhicule, lesdits organes (3, 4) étant articulés chacun sur l'extrémité libre de l'un de deux bras (6, 7) pivotant par l'actionnement du levier, respectivement sur deux axes perpendiculaires (5, 12) entre eux et à la direction précitée, l'un (12) des deux axes dit premier étant fixe alors que l'autre (5) dit second, pivote autour d'un axe perpendiculaire audit second axe et porté par un support fixe, caractérisé en ce que le levier (1) s'étend sensiblement parallèlement à la direction précitée (D) et pivote sur le second axe (5) avec l'un des bras (6) dit second bras, ledit second axe (5) étant monté pivotant autour du premier axe (12), celui-ci étant fixé au support (2) entre deux flasques parallèles (2a,2b) reliées par une paroi (14) et s'étendant sensiblement suivant la direction (D) précitée, jusqu'à deux cloisons transversales d'extrémité (2c, 2d) traversées par les organes de transmission (3, 4).

2. Dispositif selon la revendication 1, caractérisé en ce que l'autre (7) des bras (6, 7) dit premier bras, est parallèle au second axe précité (5), tous deux étant solidaires d'un moyeu (17) monté tournant autour du premier axe (12) entre les deux flasques (2a, 2b).

3. Dispositif selon les revendications 1 ou 2, caractérisé en ce que les organes (3, 4) sont des câbles (3a, 4a) et les cloisons (2c, 2d) constituent des surfaces d'appui pour les gaines (15, 16) des câbles (3, 4).

4. Dispositif selon l'une quelconque des revendications précédentes, caractérisé en ce que le support (2) est réalisé en tôle pliée.

5. Dispositif selon l'une quelconque des revendications précédentes, caractérisé en ce que l'une des cloisons (2c, 2d) relie les parties inférieures respectives des deux flasques (2a, 2b).

6. Dispositif selon l'une quelconque des revendications précédentes, caractérisé en ce que la paroi précitée (14) est destinée à la fixation du support (2) dans le véhicule (V).

7. Dispositif selon l'une quelconque des revendications précédentes, caractérisé en ce que la direction précitée (D) est sensiblement parallèle à la colonne de direction du véhicule (V), ou moins inclinée que cette dernière par rapport à la direction verticale du véhicule (V).

## Claims

1. Device for the control of a change-speed gearbox of an automotive vehicle, of the kind comprising an operating lever (1) adapted to actuate two transmission members (3, 4) connected to the change-speed gearbox so as to operate the selection and the shifting of several gear ratios, respectively, the end portions of these two members located towards the lever extending in substantially parallel relation to a longitudinal direction (D) of the vehicle, the said members (3, 4) being each one pivotally connected to the free end of one of two arms (6, 7) pivoting through the actuation of the lever on two axes (5, 12) perpendicular to each other and to the aforesaid direction, the so-called first one (12) of the two axes being stationary whereas the so-called second one (5) pivots about an axis perpendicular to the said second axis and carried by a stationary support, characterized in that the lever (1) extends in substantially parallel relation to the aforesaid direction (D) and pivots on the second axis (5) together with one (6) of the arms or so-called second arm, the said second axis (5) being mounted for pivoting about the first axis (12), the latter being fastened to the support (2) between two parallel flanges (2a, 2b) connected to a wall (14) and extending substantially in the aforesaid direction (D) down to two transverse end partitions (2c, 2d) through which extend the transmission members (3, 4).

2. Device according to claim 1, characterized in that the other one so-called first arm (7) of the arms (6, 7) is parallel to the aforesaid second axis (5), both being rigidly connected to a hub (17) mounted for rotation about the first axis (12) between both flanges (2a, 2b).

3. Device according to claim 1 or 2, characterized in that the members (3, 4) are cables (3a, 4a) and the partitions (2c, 2d) constitute bearing surfaces for the sheathes (15, 16) of the cables (3, 4).

4. Device according to any one of the foregoing claims, characterized in that the support (2) is made from a bent metal sheet.

5. Device according to any one of the foregoing claims, characterized in that one of the partitions (2c, 2d) connects the respective lower parts of both flanges (2a, 2b).

6. Device according to any one of the foregoing claims, characterized in that the aforesaid wall (14) is intended for the fastening of the support (2) in the vehicle (V).

7. Device according to any one of the foregoing claims, characterized in that the aforesaid direction (D) is substantially parallel to the steering column of the vehicle (V) or less inclined than the latter with respect to the vertical direction of the vehicle (V).

## Patentansprüche

1. Vorrichtung zur Steuerung eines Geschwindigkeitswechselgetriebes eines Kraftfahrzeuges, der einen Betätigungshebel (1) aufweisenden Gattung, der geeignet ist, zwei mit dem Geschwindigkeitswechselgetriebe verbundene Übertragungsglieder (3, 4) zu betätigen, um jeweils die Auswahl und die Gangwechselschaltung mehrerer Übersetzungsverhältnissen zu steuern, wobei die Endteile dieser beiden zum Hebel hin gelegenen Glieder sich etwa parallel zu einer Längsrichtung (D) des Fahrzeuges erstrecken, wobei die besagten Glieder (3,4) jeweils an dem freien Ende des einen von zwei Armen (6, 7) angelenkt sind, die durch die Betätigung des Hebels jeweils um zwei zueinander und zu der vorgenannten Richtung senkrechten Achsen (5, 12) schwenken, wobei die eine sogenannte erste (12) der beiden Achsen ortsfest ist, während die andere sogenannte zweite (5) um eine zu der besagten zweiten Achse senkrechte und durch eine ortsfeste Halterung getragene Achse schwenkt, dadurch gekennzeichnet, dass der Hebel (1) sich etwa parallel zu der vorgenannten Richtung (D) erstreckt und um die zweite Achse (5) zusammen mit dem einen sogenannten zweiten Arm (6) der Arme schwenkt, wobei die besagte zweite Achse (5) schwenkbar um die erste Achse (12) angeordnet ist, wobei die letztere an der Halterung (2) zwischen zwei parallelen Flanschen (2a, 2b) befestigt ist, die durch eine Wand (14) verbunden sind und sich etwa in der vorgenannten Richtung (D) bis zu zwei durch die Übertragungsglieder (3,4) durchsetzten Querendwandungen (2c, 2d) erstrecken.

2. Vorrichtung nach Anspruch 1, dadurch gekennzeichnet, dass der andere sogenannte erste Arm der Arme (6,7) mit der vorgenannten zweiten Achse (5) parallel ist, wobei beide an einer drehbar um die erste Achse (12) zwischen den beiden Flanschen (2a, 2b) angeordneten Nabe (17) fest verbunden sind.

3. Vorrichtung nach Anspruch 1 oder 2, dadurch gekennzeichnet, dass die Glieder (3, 4) Drahtseile (3a, 4a) sind und die Wandungen (2c, 2d) Abstützflächen für die Ummantelungen (15, 16) der Drahtseile (3, 4) bilden.

4. Vorrichtung nach irgendeinem der vorangehenden Ansprüche, dadurch gekennzeichnet, dass die Halterung (2) aus gebogenem Blech hergestellt ist.

5. Vorrichtung nach irgendeinem der vorangehenden Ansprüche, dadurch gekennzeichnet, dass die eine der Wandungen (2c, 2d) die jeweiligen unteren Teile der beiden Flanschen (2a, 2b) verbinden.

6. Vorrichtung nach irgendeinem der vorangehenden Ansprüche, dadurch gekennzeichnet, dass die vorgenannte Wand (14) zu der Befestigung der Halterung (2) in dem Fahrzeug (V) bestimmt ist.

7. Vorrichtung nach irgendeinem der vorangehenden Ansprüche, dadurch gekennzeichnet, dass die vorgenannte Richtung (D) etwa parallel zu der Lenksäule des Fahrzeuges (V) oder weniger geneigt als die letztere in bezug auf die lotrechte Richtung des Fahrzeuges (V) ist.
